# EUROPÄISCHE PATENTSCHRIFT

(11) **EP 3 178 579 B1**
(45) Veröffentlichungstag und Bekanntmachung des Hinweises auf die Patenterteilung: **21.11.2018**
(21) Anmeldenummer: 16189934.9
(22) Anmeldetag: 21.09.2016
(51) Int. Cl.: B21D 17/02, B21D 19/00, B21D 41/02

(54) **VERFAHREN ZUR HERSTELLUNG EINES BRENNKAMMERROHRS FÜR RÜCKHALTESYSTEME IN KRAFTFAHRZEUGEN UND VORRICHTUNG ZUR DURCHFÜHRUNG DES VERFAHRENS**
METHOD FOR MANUFACTURING A COMBUSTION CHAMBER PIPE FOR A RESTRAINT SYSTEM IN A MOTOR VEHICLE AND DEVICE FOR IMPLEMENTING THE METHOD
PROCÉDÉ DE FABRICATION D'UNE TUBE DE CHAMBRE DE COMBUSTION PUR UNE SYSTÈME DE RETENUE DANS UN VÉHICULE AUTOMOBILE ET DISPOSITIF PERMETTANT LA MISE EN UVRE DU PROCÉDÉ

(30) Priorität: 08.12.2015 DE 102015121326
(43) Veröffentlichungstag der Anmeldung: 14.06.2017
(73) Patentinhaber: Familie Burger GbR, 87484 Nesselwang (DE)
(72) Erfinder: Burger, Manuel, 20357 Hamburg (DE)
(74) Vertreter: Charrier Rapp & Liebau

(56) Entgegenhaltungen:
- WO-A1-2012/046163
- DE-B4- 19 861 171
- DE-U1- 9 211 512
- US-A- 5 634 367
- US-A- 5 715 723

## Beschreibung

Die Erfindung betrifft ein Verfahren zur Herstellung eines Brennkammerrohrs für Rückhaltesysteme in Kraftfahrzeugen und eine Vorrichtung zur Durchführung des Verfahrens.

Brennkammerrohre werden zur Aufnahme der Treibladung für Airbags, Gurtstraffersysteme oder andere Rückhaltesysteme in Kraftfahrzeugen eingesetzt. Diese werden üblicherweise aus rohrförmigen Ausgangsteilen hergestellt, an denen diverse Crimp-, Präge-, Kalibier- und Stanzbearbeitungen vorgenommen werden. Diese Bearbeitung erfolgt üblicherweise in hydraulischen Sondermaschinen, bei denen die einzelnen Arbeitsabläufe voneinander getrennt sind, was zu Synchronisations- und Qualitätsproblemen führen kann. Außerdem ist die Produktionsgeschwindigkeit beschränkt.

Aus der US 5 715 723 A ist ein Ringpressmodul mit mehreren durch ein Steuerelement in Radialrichtung synchronisiert verschiebbaren Stößeln bekannt.

Aufgabe der Erfindung ist es, ein Verfahren und eine Vorrichtung zur Herstellung eines Brennkammerrohrs für Rückhaltesysteme in Kraftfahrzeugen zu schaffen, die eine schnelle und präzise Bearbeitung ermöglichen.

Diese Aufgabe wird durch ein Verfahren mit den Merkmalen des Anspruchs 1 und durch eine Vorrichtung mit den Merkmalen des Anspruchs 5 gelöst. Zweckmäßige Weiterbildungen und vorteilhafte Ausführungsformen der Erfindung sind Gegenstand der Unteransprüche.

Bei dem erfindungsgemäßen Verfahren wird das Brennkammerrohr durch mehrere sternförmig um das Brennkammerrohr angeordnete und durch ein Ringpressmodul mit mehreren in Radialrichtung synchronisiert verschiebbaren Stößeln bewegbare Prägewerkzeuge und zwei in die Enden des Brennkammerrohrs ragende Innenstempel mit jeweils einem Stützdorn und einem relativ zum Stützdorn verschiebbaren Umformdorn geprägt. Dabei wird das Brennkammerrohr von der Außenseite durch die über die Stößel radial verschiebbaren Prägewerkzeuge gegen die Stützdome geprägt und die Enden des Brennkammerrohrs werden bei geschlossenen Prägewerkzeugen durch die den Stützdornen nachgeführten Umformdorne geformt. Die Umformung von der Außenseite kann also durch konzentrische Prägebewegungen erfolgen, wodurch eine hohe Präzision erreichbar ist. Die Verformung der Rohrenden mit der Prägung von Innenfassen und einer Kalibrierung der Rohrenden kann außerdem erfolgen, wenn das Brennkammerrohr von dem um das Brennkammerohr angeordneten Prägewerkzeugen vollständig umschlossen ist, wodurch ebenfalls eine präzise Umformung mit einer verbesserten Genauigkeit erreicht werden kann.

In einer zweckmäßigen Ausführung können die Stützdome vor dem Zusammenfahren der Prägewerkzeuge durch eine Stelleinrichtung in eine Prägestellung verfahren und die Umformdorne nach dem Zusammenfahren der Prägewerkzeuge relativ zu den Stützdornen verschoben werden.

In einem weiteren Bearbeitungsschritt kann das Brennkammerrohr durch ein Stanzwerkzeug mit einer in das Brennkammerrohr ragenden Schneidbuchse und mehreren sternförmig um das Brennkammerrohr angeordneten und in einer Führungsbuchse radial verschiebbaren Schneidstempeln gestanzt werden. Auch hier können die gleichmäßig um das Brennkammerrohr angeordneten Schneidstempel z.B. durch ein Ringpressmodul mit mehreren um das Brennkammerrohr angeordneten und in Radialrichtung synchronisiert verschiebbaren Stößeln gleichzeitig bewegt, wodurch eine selbstzentrierende und genaue Bearbeitung ermöglicht wird.

Eine erfindungsgemäße Vorrichtung zeichnet sich durch ein Ringpressmodul mit mehreren um das Brennkammerrohr angeordneten, durch einen Steuerelement in Radialrichtung synchronisiert verschiebbaren Stößeln und durch Stelleinrichtungen zur Axialverstellung zweier in die beiden Enden des Brennkammerrohrs ragender Innenstempel aus, wobei die Innenstempel jeweils einen Stützdorn und einen relativ zum Stützdorn verschiebbaren Umformdorn enthalten.

In einer vorteilhaften Ausführung können an den Stößeln des Ringpressmoduls entsprechende Halteelemente zur lösbaren Halterung mehrerer um das Brennkammerrohr angeordneter Prägewerkzeuge vorgesehen sein. Die Prägewerkzeuge können zum einfachen Wechseln an einer gemeinsamen Trägerplatte angeordnet sein. Dadurch können die Umrüstzeiten reduziert werden.

Die Stelleinrichtungen enthalten zweckmäßigerweise einen auf einem Untergestell in Längsrichtung des Brennkammerrohrs verstellbaren Schlitten mit einem horizontalen Träger, an dem die Stützdome und Umformdorne angeordnet sind.

Das Steuerelement zur radialen Verschiebung der Stößel kann in einer weiteren vorteilhaften Ausführung durch eine mittels eines Exzenterantriebs angetriebene Antriebsschwinge intermittierend gedreht werden. Die Antriebsschwinge weist in einer möglichen Ausführung einen an einem Gestell über eine Lageranordnung drehbar gelagerten, ringförmigen Unterteil zur Aufnahme des ringförmigen Steuerelements und einen nach oben vorstehenden Arm zum Eingriff mit einem exzentrischen Antriebszapfen einer mittels eines Motors angetriebenen Welle auf.

Die Vorrichtung kann auch ein Ringpressmodul mit mehreren um das Brennkammerrohr angeordneten und durch ein Steuerelement in Radialrichtung synchronisiert verschiebbaren Stößeln zur Betätigung eines Stanzwerkzeugs mit mehreren sternförmig um das Brennkammerrohr angeordneten und in einer Führungsbuchse radial verschiebbaren Schneidstempeln aufweisen. Dadurch können auch Stanzbearbeitungen an dem Brennkammerrohr durchgeführt werden. Auch die Schneidstempel mit der Führungsbuchse und einer zugehörigen Schneidbuchse können zur einfachen Umrüstung an einer gemeinsamen Trägerplatte angeordnet sein.

Weitere Besonderheiten und Vorzüge der Erfindung ergeben sich aus der folgenden Beschreibung eines bevorzugten Ausführungsbeispiels anhand der Zeichnung. Es zeigen:
- **Figur 1**: eine Vorrichtung zur Herstellung von Brennkammerrohren in einer Seitenansicht;
- **Figur 2**: ein Ringpressmodul der in Figur 1 gezeigten Vorrichtung in einer Vorderansicht;
- **Figur 3**: eine Trägerplatte mit daran befestigten Prägewerkzeugen;
- **Figur 4**: einen ersten Bearbeitungsschritt zur Herstellung eines Brennkammerrohres;
- **Figur 5**: einen zweiten Bearbeitungsschritt zur Herstellung eines Brennkammerrohres und
- **Figur 6**: einen dritten Bearbeitungsschritt zur Herstellung eines Brennkammerrohres.

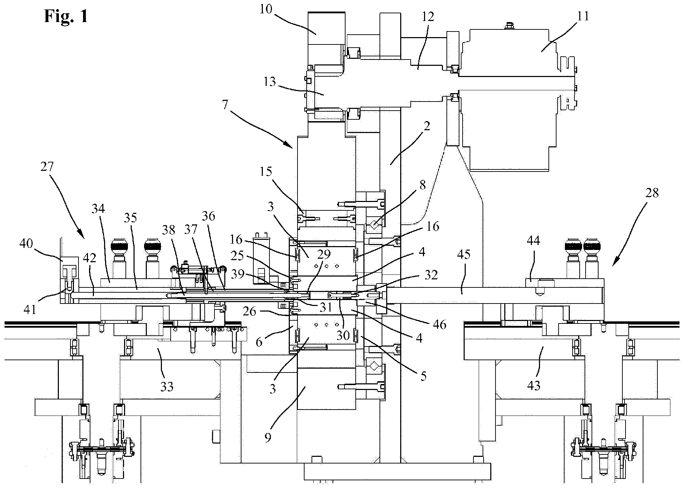

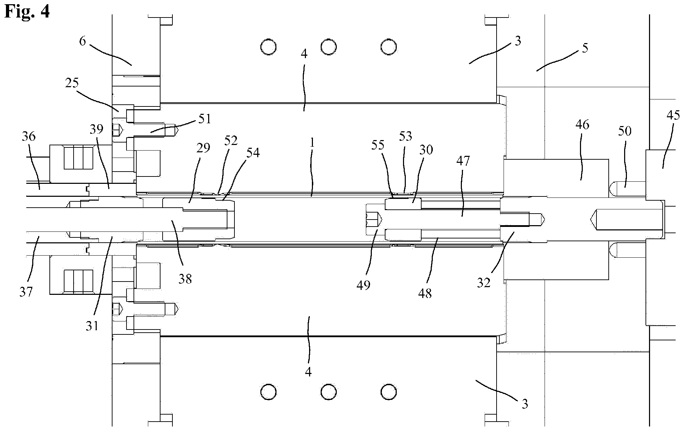

In Figur 1 ist eine Vorrichtung zur Herstellung eines in den Figuren 4 bis 6 dargestellten Brennkammerrohrs 1 für Rückhaltesysteme in Kraftfahrzeugen in einer Seitenansicht gezeigt. Die in Figur 1 schematisch dargestellte Vorrichtung enthält ein Gestell 2, an dem mehrere sternförmig angeordnete und über einen Schwingenantrieb in Radialrichtung synchronisiert nach innen und außen bewegbare Stößel 3 mit daran lösbar angeordneten Prägewerkzeugen 4 radial verschiebbar angeordnet sind. Die Stößel 3 sind zwischen einer am Gestell 2 befestigten hinteren Führungsplatte 5 und einer über Distanzhülsen von der hinteren Führungsplatte 5 beabstandeten vorderen Führungsplatte 6 radial verschiebbar geführt.

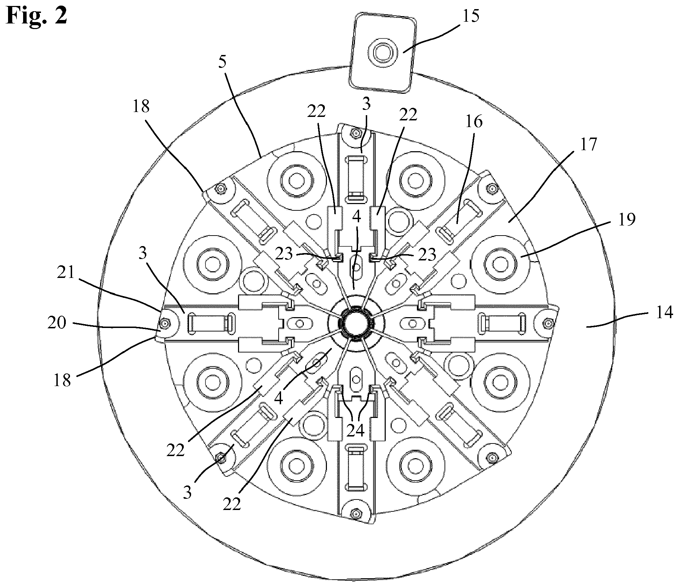

Der Schwingenantrieb enthält eine Antriebsschwinge 7 mit einem am Gestell 2 über eine Lageranordnung 8 drehbar gelagerten, ringförmigen Unterteil 9 und einem nach oben vorstehenden Arm 10, durch den die Antriebsschwinge 7 zur intermittierenden Drehung des ringförmigen Unterteil 9 um einen vorgegeben Winkelbereich über einen Exzenterantrieb hin und her bewegt werden kann. Der Exzenterantrieb umfasst eine im Gestell 2 drehbar gelagerte und durch einen Motor 11 angetriebene Welle 12, die einen mit dem Arm 10 der Antriebsschwinge 7 zur Hin- und Herbewegung zusammenwirkenden, exzentrischen Antriebszapfen 13 enthält. In dem ringförmigen Unterteil 9 der Antriebsschwinge 7 ist ein auch in Figur 2 dargestelltes ringförmiges Steuerelement 14 angeordnet, das über einen Mitnehmer 15 mit der Antriebsschwinge 7 verbunden ist und über die Antriebschwinge 7 in einem vorgegebenen Winkelbereich hin und her gedreht werden kann

Durch das über die Antriebsschwinge 7 drehbare Steuerelement 14 und die durch das Steuerelement 14 radial nach innen und mit Hilfe von Rückstellfedern 16 oder anderen Rückstellelementen wieder radial nach außen bewegbaren Stößel 3 wird ein Ringpressmodul geschaffen, durch das die Prägewerkzeuge 4 zur Durchführung konzentrischer Crimp-, Präge- und Kalibrierbearbeitungen oder auch Schneidstempel zur Durchführung von Stanzbearbeitungen mit einer hohen Bearbeitungsgenauigkeit bewegt werden können.

In Figur 2 ist eine Vorderansicht eines Ringpressmoduls zur Durchführung von Prägebearbeitungen gezeigt, wobei hier die vordere Führungsplatte 6 abgenommen ist. Aus dieser Darstellung ist erkennbar, dass die innerhalb des ringförmigen Steuerelements 14 sternförmig angeordneten Stößel 3 zwischen kreissegmentförmigen Führungsstücken 17 radial verschiebbar geführt sind. Die Führungstücke 17 sind an der Innenseite der hier erkennbaren hinteren Führungsplatte 5 und auch an der Innenseite der hier weggelassenen vorderen Führungsplatte 6 angeordnet. In dieser Darstellung ist auch erkennbar, dass das ringförmige Steuerelement 14 an seiner Innenseite mehrere über den Umfang verteilte schräge Steuerflächen 18 enthält. Außerdem sind auch die Distanzhülsen 19 erkennbar, über welche die vordere Führungsplatte 6 und die hintere Führungsplatte 5 voneinander beabstandet gehalten sind.

Aus Figur 2 ist auch ersichtlich, dass an den äußeren Enden der radial verschiebbaren Stößel 3 an den Steuerflächen 18 des ringförmigen Steuerelements 14 anliegende Druckstücke 20 angeordnet sind. Die Druckstücke 20 enthalten eine an den schrägen Steuerflächen 18 des ringförmigen Steuerelements 14 anliegende Schrägfläche 21. Durch die Druckstücke 20 mit den Schrägflächen 21 und das ringförmige Steuerelement 14 mit den schrägen Steuerflächen 18 wird eine Art Nockenantrieb gebildet, durch den die Stößel 3 mit den daran angeordneten Prägewerkzeugen 4 bei einer Drehung des ringförmigen Steuerelements 14 in Radialrichtung mechanisch synchronisiert nach innen bewegt werden können. Die Rückstellung der Stößel 3 erfolgt durch die Rückstellfedern 16. Die Stößel 3 weisen an ihren radial inneren Enden klammerförmige Halteelemente 22 zur lösbaren Halterung der Prägewerkzeuge 4 auf. Die klammerförmigen Halteelemente 22 enthalten nach innen ragende Haltenasen 23 zum Eingriff in seitliche Haltenuten 24 der Prägewerkzeuge 4. Dadurch können die Prägewerkzeuge 4 seitlich eingeschoben werden.

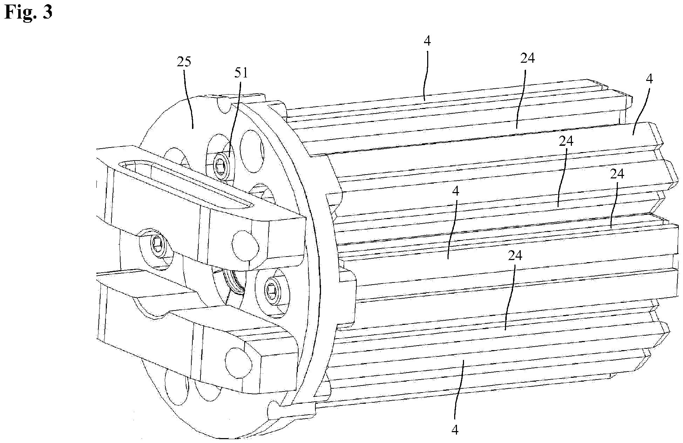

Zum einfacheren Auswechseln sind die mit den seitlichen Haltenuten 24 versehenen Prägewerkzeuge 4 gemäß Figur 3 mit ihrem einen Ende an einer gemeinsamen Trägerplatte 25 montiert. Die Prägewerkzeuge 4 sind an der Trägerplatte 25 so montiert, dass sie die radiale Prägebewegung durchführen können, jedoch ausreichend gehalten sind, um durch Demontage bzw. Montage der Trägerplatte 25 einfach ausgetauscht werden zu können. Die Trägerplatte 25 mit den seitlich frei auskragenden Prägewerkzeugen 4 ist gemäß Figur 1 in einer entsprechenden Aufnahme 26 in der vorderen Führungsplatte 5 befestigt. Durch Demontage der Trägerplatte 25 können so sämtliche Prägewerkzeuge 4 gleichzeitig zwischen den klammerförmigen Halteelementen 22 der Stößel 3 herausgezogen und durch andere Prägewerkzeuge oder andere Werkzeuge ersetzt werden. Dadurch kann eine einfache Umrüstung der Vorrichtung mit anderen Prägewerkzeugen oder anderen Werkzeugen erfolgen.

Die in Figur 1 gezeigte Vorrichtung weist neben dem Ringpressmodul mit den sternförmig um das Brennkammerrohr 1 angeordneten und radial beweglichen Stößeln 3 und den daran angeordneten Prägewerkzeugen 4 zusätzliche Stelleinrichtungen 27 und 28 zur Axialverstellung zweier in die beiden Enden des Brennkammerrohrs 1 ragender Innendorne mit jeweils einem inneren Stützdorn 29 bzw. 30 als Gegenhalter für die Umformung des Brennkammerrohres 1 von der Außenseite und einem äußeren Umformdorn 31 bzw. 32 für die Umformung des Brennkammerrohres 1 von der Innenseite auf. Die inneren Stützdome 29 und 30 dienen bei der gezeigten Ausführung als Gegenhalter zur Herstellung einer Sicke und einer Fläche von der Außenseite, während die äußeren Umformdorne 31 und 32 zur Herstellung einer inneren Fase an den Rohrenden und zur Aufweitung bzw. Kalibrierung der beiden Rohrenden des Brennkammerrohres 1 eingesetzt werden. Durch die beiden äußeren Umformdorne 31 und 32 wird bei der gezeigten Ausführung also nicht nur eine innere Fase an den beiden Enden des Brennkammerrohres 1 geprägt, sondern die Enden des Brennkammerohres 1 werden auch noch etwas aufgeweitet und nach außen kalibriert.

Die in Figur 1 linke Stelleinrichtung 27 enthält einen auf einem Untergestell 33 in Längsrichtung des Brennkammerohres 1 verstellbaren Schlitten 34 mit einem horizontalen Träger, der einen hinteren Teil 35 und einen nach vorne auskragenden vorderen Teil 36 enthält. In dem vorderen Teil 36 des horizontalen Trägers ist eine zur Längsachse des Brennkammerrohrs 1 koaxiale Schubhülse 37 und eine innerhalb der Schubhülse 37 angeordnete und zu dieser relativ verschiebbare Schubstange 38 angeordnet sind. An dem freien Ende des vorderen Teils 36 des Trägers ist außerdem eine an der vorderen Stirnseite der Prägewerkzeuge 3 zur Anlage gelangende erste Abschlusshülse 39 angeordnet. An dem hinteren Teil 35 des Trägers befindet sich ein mittels eines Stellzylinders 40 verstellbares Klemmstück 41, durch das die Schubstange 38 über eine mit dieser verschraubten Betätigungsstange 42 in einer vorderen Stellung gehalten oder zur Verschiebung nach hinten freigegeben werden kann. An dem vorderen Ende der Schubstange 38 ist der erste Stützdorn 29 und an dem vorderen Ende der Schubhülse 37 der erste Umformdorn 31 befestigt.

Die in Figur 1 rechte Stelleinrichtung 28 enthält ebenfalls einen auf einem Untergestell 43 in Längsrichtung des Brennkammerohres 1 verstellbaren Schlitten 44 mit einem horizontalen Träger 45. An dem auskragenden vorderen Ende des Trägers 45 sind eine zur Anlage an der hinteren Stirnfläche der Prägewerkzeuge 3 zur Anlage gelangende zweite Abschlusshülse 43 sowie der zweite Stützdorn 30 und der zweite Umformdorn 32 angeordnet.

Aus Figur 4 geht hervor, dass der erste Stützdorn 29 auf das vordere Ende der Schubstange 38 aufgeschraubt ist, während der erste Umformdorn 31 in das vordere Ende der Schubhülse 37 eingeschraubt ist. Der zweite Stützdorn 30 sitzt auf einem in das Stirnende des zweiten Umformdorns 32 eingeschraubten Bolzen 47 und wird durch eine Feder 48 gegen den Kopf 49 des Bolzens 47 gedrückt. Die zweite Abschlusshülse 43 wird durch federbelastete Stifte 50 gegen die innere Stirnfläche der Prägewerkzeuge 3 gedrückt. An den vorderen Stirnflächen sind die Prägewerkzeuge 3 über Schrauben 51 an der Trägerplatte 25 befestigt.

Die Herstellung des Brennrohrs 1 wird im Folgenden anhand der Figuren 4 bis 6 erläutert.

In einem ersten Verfahrensschritt werden die beiden inneren Stützdome 29 und 30 zusammen mit den beiden äußeren Umformdornen 31 und 32 bei noch geöffneten Prägewerkzeugen 4 über die beiden Schlitten 34 und 44 in die in Figur 4 gezeigte Stellung verschoben. Die beiden inneren Stützdome 29 und 30 befinden sich in der gewünschten Prägestellung, während die beiden Umformdorne 31 und 32 nur leicht in die beiden Enden des Brennkammerrohres 1 eingefahren sind. Die Prägewerkzeuge 3 weisen an ihrer Innenseite entsprechende Vorsprünge 52 und 53 und die Stützdome 29 und 30 an ihrer Außenseite zu den Vorsprüngen 52 und 53 gehörende Vertiefungen 54 und 55 auf.

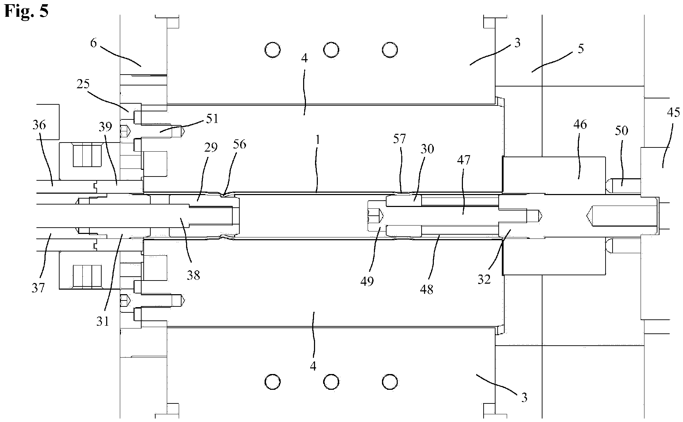

In einen nächsten Schritt werden dann die mit den Vorsprüngen 52 und 53 versehenen Prägewerkzeuge 3 gegen die mit dazugehörigen Vertiefungen 54 und 55 versehenen Stützdome 29 und 30 gemäß Figur 5 zusammengefahren, wobei an dem Brennkammerrohr 1 eine Sicke 56 und eine Fläche 57 erzeugt wird. Beim Zusammenfahren der Prägewerkzeuge 3 wird die Schubstange 38 mit dem daran angeordneten ersten Stützdorn 29 durch das über den Stellzylinder 40 in eine untere Haltestellung verschobene Klemmstück 41 gehalten, so dass der Stützdorn 29 durch die Kraft der Prägewerkzeuge 4 nicht ausweichen kann. Der zweite Stützdorn 30 wird durch die Kraft der Feder 48 in seiner Position gehalten.

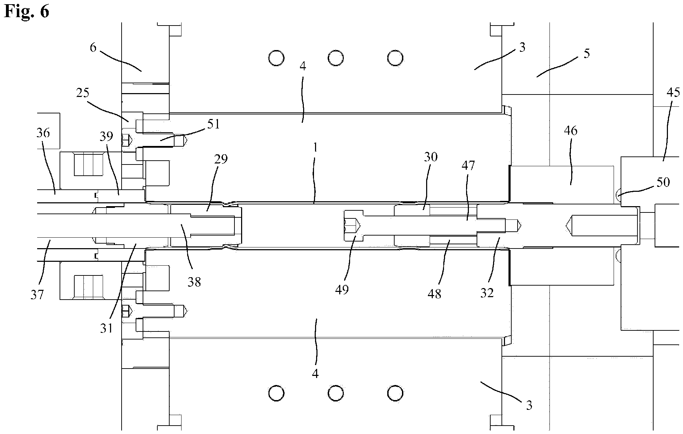

In einem weiteren Schritt werden dann die beiden Umformdorne 31 und 32 dann gemäß Figur 6 nachgeschoben. Der erste Umformdorn 31 wird durch eine Stellbewegung des ersten Schlittens 34 über die am hinteren Teil des Trägers abgestützte Schubhülse 37 weiter in das Brennkammerrohr 1 hineingeschoben, wobei das keilförmige Klemmstück 41 über den Stellzylinder 29 in eine angehobene Freigabestellung bewegt wird, so dass durch die en am ersten Schlitten 34 angeordnete erste Umformdorn 31 wird durch die Schubstange 38 mit dem vorderen Stützdorn 31 in seiner Stellung verbleiben kann. Dadurch wird an dem vorderen Ende des Brennkammerrohrs 1 eine innere Fase geprägt. Außerdem wird das vordere Ende des Brennkammerrohrs 1 nach außen kalibriert. Gleichzeitig wird auch der zweite Umformdorn 32 durch eine Stellbewegung des zweiten Schlittens 44 weiter in das Brennkammerrohr 1 hineingeschoben, wodurch auch am hinteren Ende des Brennkammerrohrs 1 eine innere Fase geprägt und das hintere Ende nach außen kalibriert wird. Der zweite Prägedorn 30 wird dabei durch die Prägewerkzeuge 4 in seiner Stellung gehalten, wobei die Feder 48 zusammengedrückt wird.

In einem weiteren Bearbeitungsschritt kann das Brennkammerrohr 1 durch ein Stanzwerkzeug mit einer in das Brennkammerrohr ragenden Schneidbuchse und mehreren sternförmig um das Brennkammerrohr angeordneten und in einer Führungsbuchse radial verschiebbaren Schneidstempeln gestanzt werden. Auch hier können die gleichmäßig um das Brennkammerrohr angeordneten Schneidstempel z.B. durch ein Ringpressmodul mit mehreren um das Brennkammerrohr 1 angeordneten und in Radialrichtung synchronisiert verschiebbaren Stößeln 3 gleichzeitig bewegt, wodurch eine selbstzentrierende und genaue Bearbeitung ermöglicht wird.

### Bezugszeichenliste

- 1: Brennkammerohr
- 2: Gestell
- 3: Stößel
- 4: Prägewerkzeug
- 5: hintere Führungsplatte
- 6: vordere Führungsplatte
- 7: Antriebsschwinge
- 8: Lageranordnung
- 9: ringförmiges Unterteil
- 10: Arm
- 11: Motor
- 12: Welle
- 13: exzentrischer Antriebszapfen
- 14: ringförmiges Steuerelement
- 15: Mitnehmer
- 16: Rückstellfeder
- 17: Führungsstück
- 18: schräge Steuerflächen
- 19: Distanzhülse
- 20: Druckstück
- 21: Schrägfläche
- 22: klammerförmiges Halteelement
- 23: Haltenase
- 24: Haltenut
- 25: Trägerplatte
- 26: Aufnahme
- 27: Stelleinrichtung
- 28: Stelleinrichtung
- 29: erster Stützdorn
- 30: zweiter Stützdorn
- 31: erster Umformdorn
- 32: zweiter Umformdorn
- 33: Untergestell
- 34: Schlitten
- 35: hinterer Teil eines Trägers
- 36: vorderer Teil eines Trägers
- 37: Schubhülse
- 38: Schubstange
- 39: erste Abschlusshülse
- 40: Stellzylinder
- 41: Klemmstück
- 42: Betätigungsstange
- 43: Untergestell
- 44: Schlitten
- 45: Träger
- 46: zweite Abschlusshülse
- 47: Bolzen
- 48: Feder
- 49: Kopf
- 50: Stifte
- 51: Schrauben
- 52: Vorsprung
- 53: Vorsprung
- 54: Vertiefung
- 55: Vertiefung
- 56: Sicke
- 57: Fläche

## Patentansprüche

1. Verfahren zur Herstellung eines Brennkammerrohrs (1) für Rückhaltesysteme in Kraftfahrzeugen, **dadurch gekennzeichnet, dass** das Brennkammerrohr (1) durch mehrere sternförmig um das Brennkammerrohr (1) angeordnete und durch ein Ringpressmodul mit mehreren in Radialrichtung synchronisiert verschiebbaren Stößeln (3) bewegbare Prägewerkzeuge (4) und zwei in die Enden des Brennkammerrohrs (1) ragende Innenstempel mit jeweils einem Stützdorn (29, 30) und einem relativ zum Stützdorn (29, 30) verschiebbaren Umformdorn (31, 32) geprägt wird, wobei das Brennkammerrohr (1) von der Außenseite durch die über die Stößel (3) radial verschiebbaren Prägewerkzeuge (4) gegen die Stützdome (29, 30) geprägt wird und die Enden des Brennkammerrohrs (1) bei geschlossenen Prägewerkzeugen (4) durch relativ zu den Stützdornen (29, 30) verschiebbare Umformdorne (31, 32) geformt werden.

2. Verfahren nach Anspruch 1, **dadurch gekennzeichnet, dass** die Stützdome (29, 30) vor dem Zusammenfahren der Prägewerkzeuge (4) durch eine Stelleinrichtung (27, 28) in eine Prägestellung verfahren und die Umformdorne (31, 32) nach dem Zusammenfahren der Prägewerkzeuge (4) relativ zu den Stützdornen (29, 30) verschoben werden.

3. Verfahren nach Anspruch 1 oder 2, **dadurch gekennzeichnet, dass** das Brennkammerrohr (8) durch ein Stanzwerkzeug mit einer in das Brennkammerrohr (8) ragenden Schneidbuchse und mehreren sternförmig um das Brennkammerrohr angeordneten und in einer Führungsbuchse radial verschiebbaren Schneidstempeln gestanzt wird.

4. Verfahren nach Anspruch 3, **dadurch gekennzeichnet, dass** die Schneidstempel durch ein Ringpressmodul mit mehreren in Radialrichtung synchronisiert verschiebbaren Stößeln (3) hin und her bewegt werden.

5. Vorrichtung zur Herstellung eines Brennkammerrohrs (1) für Rückhaltesysteme in Kraftfahrzeugen, die ein um das Brennkammerrohr (1) angeordnetes Ringpressmodul mit mehreren durch ein Steuerelement (14) in Radialrichtung synchronisiert verschiebbaren Stößeln (3) enthält, **gekennzeichnet durch** Stelleinrichtungen (27, 28) zur Axialverstellung zweier in die beiden Enden des Brennkammerrohrs (1) ragender Innenstempel, die jeweils einen Stützdorn (29, 30) und einen relativ zum Stützdorn (29, 30) verschiebbaren Umformdorn (31, 32) enthalten.

6. Vorrichtung nach Anspruch 5, **dadurch gekennzeichnet, dass** das Ringpressmodul an den Stößeln (3) vorgesehene Halteelemente (22) zur lösbaren Halterung mehrerer um das Brennkammerrohr (1) angeordneter Prägewerkzeuge (4) enthält.

7. Vorrichtung nach Anspruch 5 oder 6, **dadurch gekennzeichnet, dass** die Stelleinrichtungen (27, 28) einen auf einem Untergestell (33. 43) in Längsrichtung des Brennkammerrohrs (1) verstellbaren Schlitten (34, 44) mit einem horizontalen Träger (35, 36, 45) enthalten, an dem die Stützdome (29, 30) und Umformdorne (31, 32) angeordnet sind.

8. Vorrichtung nach Anspruch 7 **dadurch gekennzeichnet, dass** der an dem Schlitten (34) angeordnete Träger (35, 36) einen hinteren Teil (35) und einen auskragenden vorderen Teil (36) enthält, in dem eine zur Längsachse des Brennkammerrohrs (1) koaxiale Schubhülse (37) zur Verschiebung des ersten Umformdorns (31) und eine innerhalb der Schubhülse (37) angeordnete Schubstange (38) zur Verschiebung des ersten Stützdorns (29) angeordnet ist.

9. Vorrichtung nach Anspruch 7 oder 8, **dadurch gekennzeichnet, dass** der an dem Schlitten (44) angeordnete Träger (45) an seinem vorderen Ende den zweiten Umformdorn (32) und den relativ zum Umformdorn (32) bewegliche zweiten Stützdorn (30) trägt.

10. Vorrichtung nach Anspruch 9, **dadurch gekennzeichnet, dass** der zweite Stützdorn (30) auf einem in das vordere Stirnende des zweiten Umformdorns (32) eingeschraubten Bolzen (47) sitzt und durch eine Feder (48) gegen den Kopf (49) des Bolzens (47) gedrückt wird.

11. Vorrichtung nach einem der Ansprüche 5 bis 10, **dadurch gekennzeichnet, dass** das Steuerelement (14) zur radialen Verschiebung der Stößel (3) durch eine mittels einer Exzenterantriebs (11, 12, 13) angetriebene Antriebsschwinge (7) intermittierend drehbar ist.

12. Vorrichtung nach Anspruch 9, **dadurch gekennzeichnet, dass** die Antriebsschwinge (7) einen über eine Lageranordnung (8) drehbaren ringförmigen Unterteil (9) zur Aufnahme des ringförmigen Steuerelements (14) und einen nach oben vorstehenden Arm (10) zum Eingriff mit einem exzentrischen Antriebszapfen (13) einer Welle (12) des Exzenterantriebs (11, 12, 13) enthält.

13. Vorrichtung nach einem der Ansprüche 6 bis 12, **dadurch gekennzeichnet, dass** die Prägewerkzeuge (4) an einer gemeinsamen Trägerplatte (25) angeordnet sind.

14. Vorrichtung nach einem der Ansprüche 6 bis 13, **gekennzeichnet durch** ein weiteres Ringpressmodul mit mehreren um das Brennkammerrohr (1) angeordneten und durch ein Steuerelement (14) in Radialrichtung synchronisiert verschiebbaren Stößeln (3) zur Betätigung eines Stanzwerkzeugs mit mehreren sternförmig um das Brennkammerrohr (1) angeordneten und in einer Führungsbuchse radial verschiebbaren Schneidstempeln.

## Claims

1. Method for producing a combustion chamber tube (1) for restraint systems in motor vehicles, **characterised in that** the combustion chamber tube (1) is embossed by several embossing tools (4) arranged like a star around the combustion chamber tube (1) and which can be moved by a ring press module having several punches (3) which can be displaced in synchronised manner in radial direction and two inner punches projecting into the ends of the combustion chamber tube (1) and having in each case a support mandrel (29, 30) and a shaping mandrel (31, 32) which can be displaced relative to the support mandrel (29, 30), wherein the combustion chamber tube (1) is embossed from the outer side by the embossing tools (4) which can be displaced radially via the punches (3) against the support mandrels (29, 30) and the ends of the combustion chamber tube (1) are shaped by shaping mandrels (31, 32) which can be displaced relative to the support mandrels (29, 30) when the embossing tools (4) are closed.

2. Method according to claim 1, **characterised in that** the support mandrels (29, 30) are moved into an embossing position by an adjustment device (27, 28) before closing the embossing tools (4) and the shaping mandrels (31, 32) are displaced relative to the support mandrels (29, 30) after closing the embossing tools (4).

3. Method according to claim 1 or 2, **characterised in that** the combustion chamber tube (8) is punched by a punching tool having a cutting sleeve projecting into the combustion chamber (8) and several cutting punches arranged like a star around the combustion chamber tube and which can be displaced radially in a guide sleeve.

4. Method according to claim 3, **characterised in that** the cutting punches are moved back and forth by a ring press module having several punches (3) which can be displaced in synchronised manner in radial direction.

5. Device for producing a combustion chamber tube (1) for restraint systems in motor vehicles, which contains a ring press module arranged around the combustion chamber tube (1) and having several punches (3) which can be displaced in synchronised manner in radial direction by a control element (14), **characterised by** adjustment devices (27, 28) for axial adjustment of two inner punches projecting into the two ends of the combustion chamber tube (1) and which contain in each case a support mandrel (29, 30) and a shaping mandrel (31, 32) which can be displaced relative to the support mandrel (29, 30).

6. Device according to claim 5, **characterised in that** the ring press module contains holding elements (22) provided on the punches (3) for releasable mounting of several embossing tools (4) arranged around the combustion chamber tube (1).

7. Device according to claim 5 or 6, **characterised in that** the adjustment devices (27, 28) contain a slide (34, 44) which can be adjusted on a lower frame (33, 43) in the longitudinal direction of the combustion chamber tube (1) and having a horizontal support (35, 36, 45), on which the support mandrels (29, 30) and shaping mandrels (31, 32) are arranged.

8. Device according to claim 7, **characterised in that** the support (35, 36) arranged on the slide (34) contains a rear part (35) and a projecting front part (36), in which a push sleeve (37) which is coaxial to the longitudinal axis of the combustion chamber tube (1) for displacement of the first shaping mandrel (31) and a push rod (38) arranged within the push sleeve (37) for displacement of the first support mandrel (29) is arranged.

9. Device according to claim 7 or 8, **characterised in that** the support (45) arranged on the slide (44) supports at its front end the second shaping mandrel (32) and the second support mandrel (30) which can be moved relative to the shaping mandrel (32).

10. Device according to claim 9, **characterised in that** the second support mandrel (30) sits on a pin (47) screwed into the front end-face end of the second shaping mandrel (32) and is pressed against the head (49) of the pin (47) by a spring (48).

11. Device according to one of claims 5 to 10, **characterised in that** the control element (14) for radial displacement of the punches (3) can be rotated intermittently by a reciprocating link (7) driven by means of an eccentric drive (11, 12, 13).

12. Device according to claim 9, **characterised in that** the reciprocating link (7) contains an annular bottom part (9) which can be rotated via a bearing arrangement (8) for receiving the annular control element (4) and an upwardly projecting arm (10) for engagement with an eccentric drive pin (13) of a shaft (12) of the eccentric drive (11, 12, 13).

13. Device according to one of claims 6 to 12, **characterised in that** the embossing tools (4) are arranged on a common support plate (25).

14. Device according to one of claims 6 to 13, **characterised by** a further ring press module having several punches (3) arranged around the combustion chamber tube (1) and which can be displaced in synchronised manner in radial direction by a control element (14) for actuating a punch tool having several cutting punches arranged like a star around the combustion chamber tube (1) and which can be displaced radially in a guide sleeve.

## Revendications

1. Procédé de fabrication d'un tube de chambre de combustion (1) pour systèmes de retenue dans des véhicules automobiles, **caractérisé en ce que** le tube de chambre de combustion (1) est estampé par plusieurs outils d'estampage (4) agencés en étoile autour du tube de chambre de combustion (1) et pouvant être déplacés par un module de pression annulaire avec plusieurs poussoirs (3) déplaçables de manière synchronisée dans la direction radiale et deux poinçons intérieurs faisant saillie dans les extrémités du tube de chambre de combustion (1) avec respectivement un mandrin d'appui (29, 30) et un mandrin de formage (31, 32) déplaçable par rapport au mandrin d'appui (29, 30), dans lequel le tube de chambre de combustion (1) est estampé du côté extérieur par les outils d'estampage (4) déplaçables radialement par le biais des poussoirs (3) contre les mandrins d'appui (29, 30) et les extrémités du tube de chambre de combustion (1) sont formées dans le cas d'outils d'estampage (4) fermés par des mandrins de formage (31, 32) déplaçables par rapport aux mandrins d'appui (29, 30).

2. Procédé selon la revendication 1, **caractérisé en ce que** les mandrins d'appui (29, 30) sont déplacés avant le rapprochement des outils d'estampage (4) par un dispositif de réglage (27, 28) dans une position d'estampage et les mandrins de formage (31, 32) sont déplacés après le rapprochement des outils d'estampage (4) par rapport aux mandrins d'appui (29, 30) .

3. Procédé selon la revendication 1 ou 2, **caractérisé en ce que** le tube de chambre de combustion (8) est poinçonné par un outil de poinçonnage avec une matrice faisant saillie dans le tube de chambre de combustion (8) et plusieurs poinçons de coupe agencés en étoile autour du tube de chambre de combustion et déplaçables radialement dans une douille de guidage.

4. Procédé selon la revendication 3, **caractérisé en ce que** les poinçons de coupe sont déplacés dans un sens et dans l'autre par un module de pression annulaire avec plusieurs poussoirs (3) déplaçables de manière synchronisée dans la direction radiale.

5. Dispositif de fabrication d'un tube de chambre de combustion (1) pour systèmes de retenue dans des véhicules automobiles, qui contient un module de pression annulaire agencé autour du tube de chambre de combustion (1) avec plusieurs poussoirs (3) déplaçables de manière synchronisée par un élément de commande (14) dans la direction radiale, **caractérisé par** des dispositifs de réglage (27, 28) pour le déplacement axial de deux poinçons intérieurs faisant saillie dans les deux extrémités du tube de chambre de combustion (1), qui contiennent respectivement un mandrin d'appui (29, 30) et un mandrin de formage (31, 32) déplaçable par rapport au mandrin d'appui (29, 30).

6. Dispositif selon la revendication 5, **caractérisé en ce que** le module de pression annulaire contient des éléments de retenue (22) prévus au niveau des poussoirs (3) pour la fixation amovible de plusieurs éléments d'estampage (4) agencés autour du tube de chambre de combustion (1).

7. Dispositif selon la revendication 5 ou 6, **caractérisé en ce que** les dispositifs de réglage (27, 28) contiennent un coulisseau (34, 44) déplaçable sur un châssis (33, 43) dans la direction longitudinale du tube de chambre de combustion (1) avec un support horizontal (35, 36, 45), au niveau duquel les mandrins d'appui (29, 30) et mandrins de formage (31, 32) sont agencés.

8. Dispositif selon la revendication 7 **caractérisé en ce que** le support (35, 36) agencé au niveau du coulisseau (34) contient une partie arrière (35) et une partie avant en porte-à-faux (36), dans lequel une douille de poussée (37) coaxiale pour l'axe longitudinal du tube de chambre de combustion (1) est agencée pour le déplacement du premier mandrin de formage (31) et une tige de poussée (38) agencée à l'intérieur de la douille de poussée (37) pour le déplacement du premier mandrin d'appui (29).

9. Dispositif selon la revendication 7 ou 8, **caractérisé en ce que** le support (45) agencé au niveau du coulisseau (44) porte à son extrémité avant, le deuxième mandrin de formage (32) et le deuxième mandrin d'appui (30) mobile par rapport au mandrin de formage (32).

10. Dispositif selon la revendication 9, **caractérisé en ce que** le deuxième mandrin d'appui (30) se trouve sur un boulon (47) vissé dans l'extrémité frontale avant du deuxième mandrin de formage (32) et est pressé par un ressort (48) contre la tête (49) du boulon (47).

11. Dispositif selon l'une quelconque des revendications 5 à 10, **caractérisé en ce que** l'élément de commande (14) est rotatif par intermittence par rapport au déplacement radial des poussoirs (3) par un bras oscillant d'entraînement (7) entraîné au moyen d'un entraînement excentrique (11, 12, 13).

12. Dispositif selon la revendication 9, **caractérisé en ce que** le bras oscillant d'entraînement (7) contient une partie inférieure (9) annulaire rotative par le biais d'un agencement de palier (8) pour la réception de l'élément de commande annulaire (14) et un bras (10) en saillie vers le haut pour la mise en prise avec une broche d'entraînement excentrique (13) d'un arbre (12) de l'entraînement excentrique (11, 12, 13).

13. Dispositif selon l'une quelconque des revendications 6 à 12, **caractérisé en ce que** les outils d'estampage (4) sont agencés au niveau d'une plaque de support (25) commune.

14. Dispositif selon l'une quelconque des revendications 6 à 13, **caractérisé par** un autre module de pression annulaire avec plusieurs poussoirs (3) agencés autour du tube de chambre de combustion (1) et déplaçables de manière synchronisée par un élément de commande (14) dans la direction radiale pour l'actionnement d'un outil de poinçonnage avec plusieurs poinçons de coupe agencés en étoile autour du tube de chambre de combustion (1) et déplaçables radialement dans une douille de guidage.
